(19) 

Europäisches Patentamt
European Patent Office
Office européen des brevets

(11) **EP 4 316 771 A1**

(12) **EUROPEAN PATENT APPLICATION**
published in accordance with Art. 153(4) EPC

(43) Date of publication:
**07.02.2024 Bulletin 2024/06**

(21) Application number: **22780990.2**

(22) Date of filing: **29.03.2022**

(51) International Patent Classification (IPC):
*B29C 41/18* (2006.01)      *B29K 27/06* (2006.01)
*B29L 9/00* (2006.01)      *B32B 27/30* (2006.01)
*B32B 27/40* (2006.01)      *C08J 3/12* (2006.01)
*C08J 3/20* (2006.01)      *C08K 5/12* (2006.01)
*C08L 27/06* (2006.01)      *C08L 67/02* (2006.01)
*C08K 3/00* (2018.01)

(52) Cooperative Patent Classification (CPC):
**B29C 41/18; B32B 27/30; B32B 27/40; C08J 3/12;
C08J 3/20; C08K 3/00; C08K 5/12; C08L 27/06;
C08L 67/02;** B29K 2027/06; B29L 2009/00

(86) International application number:
**PCT/JP2022/015681**

(87) International publication number:
**WO 2022/210779 (06.10.2022 Gazette 2022/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.03.2021 JP 2021055887**

(71) Applicant: **Zeon Corporation
Tokyo 100-8246 (JP)**

(72) Inventors:
• **MIKAMI, Yasuaki**
**Tokyo 100-8246 (JP)**
• **NISHIMURA, Shota**
**Tokyo 100-8246 (JP)**

(74) Representative: **Pfenning, Meinig & Partner mbB
Patent- und Rechtsanwälte
Theresienhöhe 11a
80339 München (DE)**

(54) **VINYL CHLORIDE RESIN COMPOSITION AND METHOD FOR PRODUCING SAME, VINYL CHLORIDE RESIN MOLDED BODY, AND LAMINATE**

(57)      Provided is a vinyl chloride resin composition that is capable of forming a vinyl chloride resin molded product having excellent low-temperature tensile elongation. The vinyl chloride resin composition contains mixed material particles containing a vinyl chloride resin, a plasticizer, and an inorganic substance. When the concentration of the inorganic substance in an inner part of the mixed material particles is taken to be C1 and the concentration of the inorganic substance in an outer layer of the mixed material particles is taken to be C2, a ratio C1/C2 of C1 and C2 is 0.7 or more.

EP 4 316 771 A1

**Description**

TECHNICAL FIELD

The present disclosure relates to a vinyl chloride resin composition and method of producing the same, a vinyl chloride resin molded product, and a laminate.

BACKGROUND

Vinyl chloride resins are used in a variety of applications due to generally having excellent characteristics in terms of cold resistance, heat resistance, oil resistance, and so forth.
Specifically, automobile interior materials such as a surface skin formed of a vinyl chloride resin molded product and a laminate obtained by lining a surface skin formed of a vinyl chloride resin molded product with a foamed product such as foamed polyurethane are used in the formation of automobile interior components such as automobile instrument panels and door trims, for example.
A vinyl chloride resin molded product that constitutes a surface skin of an automobile interior component such as an automobile instrument panel is produced, for example, by performing powder molding using a known molding method such as powder slush molding with respect to a vinyl chloride resin composition that contains a vinyl chloride resin, a plasticizer, and additives such as a stabilizer and a pigment (for example, refer to Patent Literature (PTL) 1).
As one specific example, in PTL 1, vinyl chloride resin particles having a particle diameter of 30 $\mu$m or more and vinyl chloride resin fine particles having a particle diameter of less than 30 $\mu$m are used together as a vinyl chloride resin, a trimellitic acid ester plasticizer, polyester plasticizer, or the like is used as a plasticizer, an inorganic substance such as perchloric acid-treated hydrotalcite or a zeolite and an organic compound such as a $\beta$-diketone or a fatty acid metal salt are used together as stabilizers, and carbon black or the like is used as a pigment. These components are mixed to produce a vinyl chloride resin composition, and then this vinyl chloride resin composition is subjected to powder slush molding to produce a surface skin formed of a vinyl chloride resin molded product.

CITATION LIST

Patent Literature

PTL 1: WO2020/090556A1

SUMMARY

(Technical Problem)

However, it has been found that there is room for improvement of a vinyl chloride resin molded product obtained through powder molding of the vinyl chloride resin composition according to the conventional technique described above in terms of tensile elongation evaluated at low temperature (hereinafter, also referred to as "low-temperature tensile elongation").
Accordingly, one object of the present disclosure is to provide a vinyl chloride resin composition that is capable of forming a vinyl chloride resin molded product having excellent low-temperature tensile elongation.
Another object of the present disclosure is to provide a vinyl chloride resin molded product having excellent low-temperature tensile elongation.
Yet another object of the present disclosure is to provide a laminate including this vinyl chloride resin molded product.

(Solution to Problem)

The inventors conducted diligent investigation with the aim of solving the problem set forth above. The inventors discovered that in the case of a vinyl chloride resin molded product that is formed using a vinyl chloride resin composition containing mixed material particles that contain a vinyl chloride resin, a plasticizer, and an inorganic substance and in which a ratio C1/C2 of the concentration C1 of the inorganic substance in an inner part and the concentration C2 of the inorganic substance in an outer layer is not less than a specific value, this vinyl chloride resin molded product can display excellent low-temperature tensile elongation. In this manner, the inventors completed the present disclosure.
Specifically, the present disclosure aims to advantageously solve the problem set forth above, and a presently disclosed vinyl chloride resin composition comprises mixed material particles containing a vinyl chloride resin, a plasticizer, and an inorganic substance, wherein when concentration of the inorganic substance in an inner part of the mixed material particles is taken to be C1 and concentration of the inorganic substance in an outer layer of the mixed material particles is taken to be C2, a ratio C1/C2 of C1 and C2 is 0.7 or more. In the case of a vinyl chloride resin composition containing mixed material particles that contain a vinyl chloride resin, a plasticizer, and an inorganic substance and in which a ratio C1/C2 of the concentration C1 of the inorganic substance in an inner part and the concentration C2 of the inorganic substance in an outer layer is not less than a specific value in this manner, this vinyl chloride resin composition is capable of forming a vinyl chloride resin molded product having excellent low-temperature tensile elongation.

Note that the ratio C1/C2 of the concentration C1 of the inorganic substance in the inner part of the mixed material particles and the concentration C2 of the inorganic substance in the outer layer of the mixed material particles that is referred to in the present disclosure can be measured through energy-dispersive X-ray analysis of cross-sections of the mixed material particles.

More specifically, in energy-dispersive X-ray analysis of cross-sections of the mixed material particles with an element contained in the inorganic substance as a measurement subject, when a count for the element present in an inner part of the mixed material particles is taken to be c1 and a count for the element present in an outer layer of the mixed material particles is taken to be c2, the ratio c1/c2 of c1 and c2 can be determined as the ratio C1/C2 of the concentration C1 of the inorganic substance in the inner part of the mixed material particles and the concentration C2 of the inorganic substance in the outer layer of the mixed material particles as in a method described in the EXAMPLES section of the present specification.

The presently disclosed vinyl chloride resin composition preferably further comprises fine particles formed of a vinyl chloride resin. When the vinyl chloride resin composition further contains fine particles formed of a vinyl chloride resin, powder fluidity of the vinyl chloride resin composition can be improved.

The presently disclosed vinyl chloride resin composition preferably has an average particle diameter of not less than 100 μm and not more than 400 μm. When the average particle diameter of the vinyl chloride resin composition is within the specific range set forth above, powder fluidity of the vinyl chloride resin composition can be improved.

Note that the "average particle diameter of a vinyl chloride resin composition" can be measured by a method described in the EXAMPLES section of the present specification.

In the presently disclosed vinyl chloride resin composition, the plasticizer preferably includes either or both of a trimellitic acid ester and a polyester. When either or both of a trimellitic acid ester and a polyester are used as the plasticizer, low-temperature tensile elongation of a vinyl chloride resin molded product can be further increased.

In the presently disclosed vinyl chloride resin composition, content of the plasticizer is preferably not less than 30 parts by mass and not more than 200 parts by mass relative to 100 parts by mass of total vinyl chloride resin content in the vinyl chloride resin composition. When the content of the plasticizer is within the specific range set forth above relative to 100 parts by mass of total vinyl chloride resin content in the vinyl chloride resin composition, low-temperature tensile elongation of a vinyl chloride resin molded product can be further increased.

The presently disclosed vinyl chloride resin composition is preferably used in powder molding. By using the vinyl chloride resin composition in powder slush molding in this manner, it is easy to obtain a vinyl chloride resin molded product that can be used well as an automobile interior material such as a surface skin for an automobile instrument panel, for example.

Moreover, the presently disclosed vinyl chloride resin composition is preferably used in powder slush molding. By using the vinyl chloride resin composition in powder slush molding in this manner, it is even easier to obtain a vinyl chloride resin molded product that can be used well as an automobile interior material such as a surface skin for an automobile instrument panel, for example.

Furthermore, the present disclosure aims to advantageously solve the problem set forth above, and a presently disclosed vinyl chloride resin molded product is obtained through molding of any one of the vinyl chloride resin compositions set forth above. A vinyl chloride resin molded product that is obtained through molding of the vinyl chloride resin composition set forth above in this manner has excellent low-temperature tensile elongation.

The presently disclosed vinyl chloride resin molded product is preferably for an automobile instrument panel surface skin. By using the vinyl chloride resin molded product as a surface skin of an automobile instrument panel in this manner, the produced automobile instrument panel has a surface skin with excellent low-temperature tensile elongation.

Also, the present disclosure aims to advantageously solve the problem set forth above, and a presently disclosed laminate comprises: a foamed polyurethane molded product; and any one of the vinyl chloride resin molded products set forth above. A laminate that includes a foamed polyurethane molded product and the vinyl chloride resin molded product set forth above has a vinyl chloride resin molded product part with excellent low-temperature tensile elongation.

The presently disclosed laminate is preferably for an automobile instrument panel. By using the laminate for an automobile instrument panel in this manner, a surface skin of the produced automobile instrument panel has excellent low-temperature tensile elongation.

Moreover, the present disclosure aims to advantageously solve the problem set forth above, and a presently disclosed method of producing a vinyl chloride resin composition comprises: kneading a vinyl chloride resin, a plasticizer, and an inorganic substance to obtain a mixture; and pulverizing the mixture to obtain mixed material particles. In the case of a vinyl chloride resin composition that is produced by kneading a vinyl chloride resin, a plasticizer, and an inorganic substance and then pulverizing the resultant mixture into a particulate form in this manner, this vinyl chloride resin composition is capable of forming a vinyl chloride resin molded product having excellent low-temperature tensile elongation.

(Advantageous Effect)

According to the present disclosure, it is possible to provide a vinyl chloride resin composition that is capable of forming a vinyl chloride resin molded product having excellent low-temperature tensile elongation and a method of producing this vinyl chloride resin composition.

Moreover, according to the present disclosure, it is possible to provide a vinyl chloride resin molded product having excellent low-temperature tensile elongation.

Furthermore, according to the present disclosure, it is possible to provide a laminate including this vinyl chloride resin molded product.

BRIEF DESCRIPTION OF THE DRAWINGS

In the accompanying drawings:

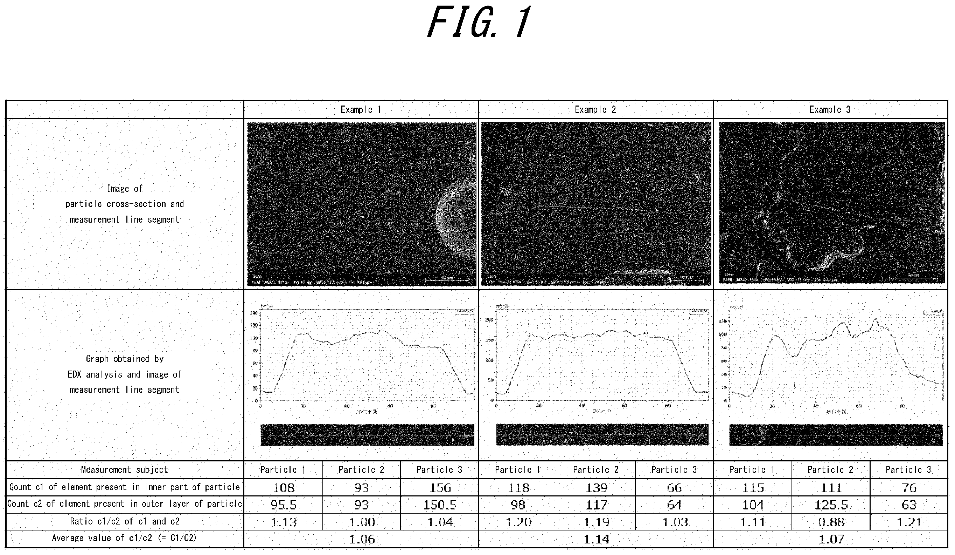

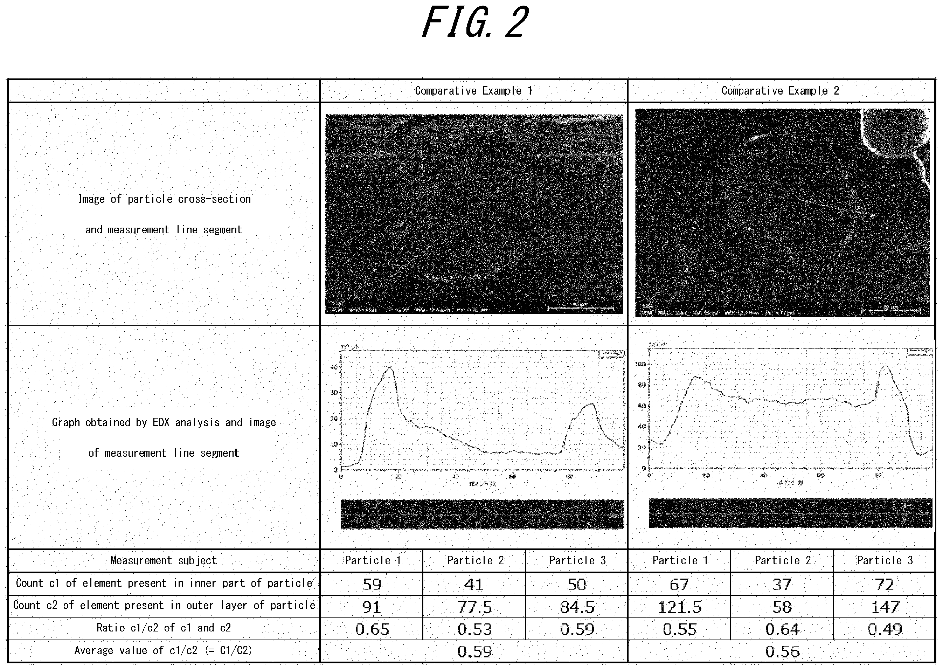

FIG. 1 is a table presenting, for each of Examples 1 to 3, an image of a mixed material particle cross-section and a measurement line segment, a graph obtained by EDX analysis (vertical axis: element count; horizontal axis: point no. (measurement point)) and an image of a measurement line segment arranged along the horizontal axis of the graph, and also a count $c_1$ for element present in an inner part of the mixed material particle, a count $c_2$ for element present in an outer layer of the mixed material particle, a ratio $c_1/c_2$ of $c_1$ and $c_2$, and an average value of $c_1/c_2$; and FIG. 2 is a table presenting, for each of Comparative Examples 1 and 2, an image of a mixed material particle cross-section and a measurement line segment, a graph obtained by EDX analysis (vertical axis: element count; horizontal axis: point no. (measurement point)) and an image of a measurement line segment arranged along the horizontal axis of the graph, and also a count $c_1$ for element present in an inner part of the mixed material particle, a count $c_2$ for element present in an outer layer of the mixed material particle, a ratio $c_1/c_2$ of $c_1$ and $c_2$, and an average value of $c_1/c_2$.

DETAILED DESCRIPTION

The following provides a detailed description of embodiments of the present disclosure.

The presently disclosed vinyl chloride resin composition can be used, for example, in formation of the presently disclosed vinyl chloride resin molded product. Moreover, a vinyl chloride resin molded product formed using the presently disclosed vinyl chloride resin composition can suitably be used, for example, as an automobile interior material such as a surface skin included in an automobile interior component such as an automobile instrument panel or a door trim.

The presently disclosed vinyl chloride resin molded product can be used, for example, in formation of the presently disclosed laminate. Moreover, a laminate formed using the presently disclosed vinyl chloride resin molded product can suitably be used, for example, as an automobile interior material used in production of an automobile interior component such as an automobile instrument panel or a door trim.

Note that the presently disclosed vinyl chloride resin composition can be produced using the presently disclosed method of producing a vinyl chloride resin composition, for example.

(Vinyl chloride resin composition)

The presently disclosed vinyl chloride resin composition contains specific mixed material particles that contain a vinyl chloride resin, a plasticizer, and an inorganic substance. By using the presently disclosed vinyl chloride resin composition, it is possible to form a vinyl chloride resin molded product having excellent low-temperature tensile elongation.

Note that in addition to the specific mixed material particles, the presently disclosed vinyl chloride resin composition preferably further contains fine particles formed of a vinyl chloride resin (hereinafter, also referred to as "vinyl chloride resin fine particles").

Moreover, the presently disclosed vinyl chloride resin composition may further contain components other than the specific mixed material particles and vinyl chloride resin fine particles to the extent that the desired effects according to the present disclosure are obtained.

<Mixed material particles>

The mixed material particles contain a vinyl chloride resin, a plasticizer, and an inorganic substance. Moreover, the mixed material particles may further contain components other than the vinyl chloride resin, the plasticizer, and the inorganic substance (i.e., other components). In other words, the mixed material particles are particles formed of a mixture that contains a vinyl chloride resin, a plasticizer, and an inorganic substance and that optionally further contains other components.

«Vinyl chloride resin»

The vinyl chloride resin contained in the mixed material particles may be a homopolymer composed of vinyl chloride monomer units or may be a vinyl chloride copolymer preferably comprising 50 mass% or more of vinyl chloride monomer units, and more preferably comprising 70 mass% or more of vinyl chloride monomer units. Specific examples of monomers (comonomers) that are copolymerizable with vinyl chloride monomer and can be used to form a vinyl chloride copolymer include monomers described in WO2016/098344A1, for example. One of these components may be used individually, or two or more of these components may be used in combination in a freely selected ratio.
Note that the vinyl chloride resin can be produced by any conventionally known production method such as suspension polymerization, emulsion polymerization, solution polymerization, or bulk polymerization. The vinyl chloride resin that is contained in the mixed material particles is preferably a vinyl chloride resin that has been produced by suspension polymerization.
The average degree of polymerization of the vinyl chloride resin contained in the mixed material particles is preferably 800 or more, and more preferably 900 or more, and is preferably 5,000 or less, more preferably 3,000 or less, and even more preferably 2,800 or less. When the average degree of polymerization of the vinyl chloride resin contained in the mixed material particles is not less than any of the lower limits set forth above, physical strength of a vinyl chloride resin molded product formed using the vinyl chloride resin composition can be sufficiently ensured while also improving tensile elongation (particularly low-temperature tensile elongation) of the vinyl chloride resin molded product. A vinyl chloride resin molded product having good tensile elongation can suitably be used as an automobile interior material, such as a surface skin of an automobile instrument panel, that has excellent ductility and that ruptures as designed without scattering of fragments when an airbag expands and is deployed, for example. On the other hand, when the average degree of polymerization of the vinyl chloride resin contained in the mixed material particles is not more than any of the upper limits set forth above, meltability of the vinyl chloride resin composition can be improved.
The "average degree of polymerization" referred to in the present disclosure can be measured in accordance with JIS K6720-2.
The proportion constituted by the vinyl chloride resin contained in the mixed material particles when the total vinyl chloride resin content in the vinyl chloride resin composition is taken to be 100 mass% is preferably 70 mass% or more, and more preferably 80 mass% or more, may be 100 mass%, and is preferably 95 mass% or less, and more preferably 90 mass% or less. When the proportion constituted by the vinyl chloride resin contained in the mixed material particles among the total vinyl chloride resin content in the vinyl chloride resin composition is not less than any of the lower limits set forth above, physical strength of a vinyl chloride resin molded product formed using the vinyl chloride resin composition can be sufficiently ensured while also improving tensile elongation (particularly low-temperature tensile elongation) of the vinyl chloride resin molded product. On the other hand, when the proportion constituted by the vinyl chloride resin contained in the mixed material particles among the total vinyl chloride resin content in the vinyl chloride resin composition is not more than any of the upper limits set forth above, sufficiently high powder fluidity of the vinyl chloride resin composition can be ensured.
Note that the "total vinyl chloride resin content in the vinyl chloride resin composition" referred to in the present specification is inclusive of the amount of the vinyl chloride resin contained in the mixed material particles described above and the amount of the subsequently described vinyl chloride resin fine particles, which are an optional component.
A particulate vinyl chloride resin is normally used as the vinyl chloride resin that is used in production of the mixed material particles. Moreover, the vinyl chloride resin that is used in production of the mixed material particles may include one type of vinyl chloride resin particles or may include two or more types of vinyl chloride resin particles, for example.
Note that the term "resin particles" as used in the present specification refers to particles having a particle diameter of 30 $\mu$m or more.
The average particle diameter of the vinyl chloride resin particles that can be used in production of the mixed material particles is normally 30 $\mu$m or more, preferably 50 $\mu$m or more, and more preferably 100 $\mu$m or more, and is preferably 500 $\mu$m or less, and more preferably 200 $\mu$m or less. When the average particle diameter of the vinyl chloride resin particles is within any of the specific ranges set forth above, low-temperature tensile elongation of a vinyl chloride resin molded product formed using the vinyl chloride resin composition containing the mixed material particles can be further improved because the vinyl chloride resin can be mixed well in the produced mixed material particles.

Note that the "average particle diameter of vinyl chloride resin particles" referred to in the present disclosure can be measured as the volume-average particle diameter by laser diffraction in accordance with JIS Z8825.

«Plasticizer»

The plasticizer that is contained in the mixed material particles is a component that can impart sufficient flexibility to a vinyl chloride resin molded product formed using the vinyl chloride resin composition. As a result of the mixed material particles in the vinyl chloride resin composition containing a plasticizer, it is possible for a formed vinyl chloride resin molded product to display sufficiently good low-temperature tensile elongation.

[Content]

The content of the plasticizer in the vinyl chloride resin composition is preferably 30 parts by mass or more, more preferably 50 parts by mass or more, even more preferably 70 parts by mass or more, and further preferably 80 parts by mass or more relative to 100 parts by mass of total vinyl chloride resin content in the vinyl chloride resin composition, and is preferably 200 parts by mass or less, more preferably 180 parts by mass or less, even more preferably 150 parts by mass or less, and further preferably 120 parts by mass or less relative to 100 parts by mass of total vinyl chloride resin content in the vinyl chloride resin composition. When the content of the plasticizer in the vinyl chloride resin composition is within any of the specific ranges set forth above, low-temperature tensile elongation of a formed vinyl chloride resin molded product can be further improved.

[Type]

Any of the primary plasticizers, secondary plasticizers, and the like described in WO2016/098344A1, for example, may be used as the plasticizer. One of these components may be used individually, or two or more of these components may be used in combination in a freely selected ratio.

Of the above-described plasticizers, it is preferable to use at least a primary plasticizer as the plasticizer from a viewpoint of further improving low-temperature tensile elongation of a formed vinyl chloride resin molded product, and more preferable to use a primary plasticizer and a secondary plasticizer together as the plasticizer.

=Primary plasticizer=

Although no specific limitations are made, it is preferable to use either or both of a trimellitic acid ester and a polyester as a primary plasticizer. By using either or both of a trimellitic acid ester and a polyester as a primary plasticizer, it is possible to even further improve low-temperature tensile elongation of a formed vinyl chloride resin molded product. Just one of a trimellitic acid ester and a polyester may be used as a primary plasticizer, or both a trimellitic acid ester and a polyester may be mixed in a freely selected ratio and used as a primary plasticizer.

The proportional content of a primary plasticizer such as a trimellitic acid ester and/or a polyester among the plasticizer is not specifically limited but is preferably 75 mass% or more, more preferably 88 mass% or more, and even more preferably 93 mass% or more, and is preferably 99 mass% or less, more preferably 98 mass% or less, and even more preferably 97 mass% or less. When the proportional content of a primary plasticizer among the plasticizer is within any of the specific ranges set forth above, low-temperature tensile elongation of a formed vinyl chloride resin molded product can be even further improved.

The content of a primary plasticizer such as a trimellitic acid ester and/or a polyester in the vinyl chloride resin composition is preferably 20 parts by mass or more, more preferably 40 parts by mass or more, even more preferably 65 parts by mass or more, and further preferably 75 parts by mass or more relative to 100 parts by mass of total vinyl chloride resin content in the vinyl chloride resin composition, and is preferably 199 parts by mass or less, more preferably 179 parts by mass or less, even more preferably 148 parts by mass or less, and further preferably 118 parts by mass or less relative to 100 parts by mass of total vinyl chloride resin content in the vinyl chloride resin composition. When the content of a primary plasticizer in the vinyl chloride resin composition is within any of the specific ranges set forth above, low-temperature tensile elongation of a formed vinyl chloride resin molded product can be even further improved.

-Trimellitic acid ester-

The trimellitic acid ester that can be included among the primary plasticizer is preferably an ester compound of trimellitic acid and a monohydric alcohol.

Specific examples of the monohydric alcohol include, but are not specifically limited to, aliphatic alcohols such as 1-hexanol, 1-heptanol, 1-octanol, 2-ethylhexanol, 1-nonanol, 1-decanol, 1-undecanol, and 1-dodecanol. Of these examples, an aliphatic alcohol having a carbon number of 6 to 18 is preferable as the monohydric alcohol, and a linear aliphatic alcohol having a carbon number of 6 to 18 is more preferable as the monohydric alcohol.

In particular, the trimellitic acid ester is preferably a triester compound in which substantially all the carboxy groups of trimellitic acid are esterified with the monohydric alcohol. Alcohol residue portions of the triester compound may all be derived from the same alcohol or may each be derived from a different alcohol.

The trimellitic acid ester may be one compound or a mixture of different compounds.

Specific examples of suitable trimellitic acid esters include tri-n-hexyl trimellitate, tri-n-heptyl trimellitate, tri-n-octyl trimellitate, tri(2-ethylhexyl) trimellitate, tri-n-nonyl trimellitate, tri-n-decyl trimellitate, triisodecyl trimellitate, tri-n-undecyl trimellitate, tri-n-dodecyl trimellitate, trialkyl trimellitates (esters including two or more types of alkyl groups having different carbon numbers [with a proviso that the carbon number is 6 to 18] in a molecule), tri-n-alkyl trimellitates (esters including two or more types of alkyl groups having different carbon numbers [with a proviso that the carbon number is 6 to 18] in a molecule), and mixtures thereof.

Specific examples of more preferable trimellitic acid esters include tri-n-octyl trimellitate, tri(2-ethylhexyl) trimellitate, tri-n-nonyl trimellitate, tri-n-decyl trimellitate, tri-n-alkyl trimellitates (esters including two or more types of alkyl groups having different carbon numbers [with a proviso that the carbon number is 6 to 18] in a molecule), and mixtures thereof.

-Polyester-

The polyester that can be included among the primary plasticizer is not specifically limited and can, for example, be a polyester including a structural unit derived from adipic acid (adipic acid-based polyester), a polyester including a structural unit derived from sebacic acid (sebacic acid-based polyester), a polyester including a structural unit derived from phthalic acid (phthalic acid-based polyester), or any other such polyester. One of these polyesters may be used individually, or two or more of these polyesters may be used as a mixture in a freely selected ratio.

In particular, a polyester that includes a structural unit derived from adipic acid (adipic acid-based polyester) is preferably used as the polyester from a viewpoint of even further improving low-temperature tensile elongation of a formed vinyl chloride resin molded product.

=Secondary plasticizer=

The secondary plasticizer is not specifically limited, but it is preferable to use epoxidized vegetable oil. By using epoxidized vegetable oil as the secondary plasticizer, it is possible to even further improve low-temperature tensile elongation of a formed vinyl chloride resin molded product.

The proportional content of a secondary plasticizer such as epoxidized vegetable oil among the plasticizer is not specifically limited, but is preferably 1 mass% or more, more preferably 2 mass% or more, and even more preferably 3 mass% or more, and is preferably 25 mass% or less, more preferably 12 mass% or less, and even more preferably 7 mass% or less. When the proportional content of a secondary plasticizer among the plasticizer is within any of the specific ranges set forth above, low-temperature tensile elongation of a formed vinyl chloride resin molded product can be even further improved.

The content of a secondary plasticizer such as epoxidized vegetable oil in the vinyl chloride resin composition is preferably 1 part by mass or more, and more preferably 2 parts by mass or more relative to 100 parts by mass of total vinyl chloride resin content in the vinyl chloride resin composition, and is preferably 10 parts by mass or less, and more preferably 5 parts by mass or less relative to 100 parts by mass of total vinyl chloride resin content in the vinyl chloride resin composition. When the content of a secondary plasticizer in the vinyl chloride resin composition is within any of the specific ranges set forth above, low-temperature tensile elongation of a formed vinyl chloride resin molded product can be even further improved.

-Epoxidized vegetable oil-

The epoxidized vegetable oil that can be included among the secondary plasticizer may be epoxidized soybean oil, epoxidized linseed oil, or the like, for example. In particular, epoxidized soybean oil is preferably used from a viewpoint of even further improving low-temperature tensile elongation of a formed vinyl chloride resin molded product.

<<Inorganic substance>>

The inorganic substance that is contained in the mixed material particles may function as a stabilizer, a pigment, a filler, or the like, for example, without any specific limitations, in the vinyl chloride resin composition.

Note that the term "inorganic substance" as used in the present specification refers to a substance that is not an organic substance and that the term "organic substance" refers to carbon compounds with the exception of binary compounds (compounds formed of two elements) such as carbon monoxide, carbon dioxide, and carbon disulfide, ternary compounds (compounds formed of three elements) such as metal cyanides, metal carbonyls, phosgene, and carbonyl sulfide, and metal carbonates such as alkali metal carbonates and alkaline earth metal carbonates.

Specific examples of inorganic substances that can function as stabilizers include perchloric acid-treated hydrotalcite, zeolites, and the like, for example.

Perchloric acid-treated hydrotalcite is a substance in which at least some of the carbonate anions in hydrotalcite have been substituted with perchlorate anions by treating the hydrotalcite with perchloric acid.

The perchloric acid-treated hydrotalcite can easily be produced by, for example, addition and stirring of hydrotalcite with a dilute aqueous solution of perchloric acid, followed by filtration, dehydration, or drying as necessary. Through this process, at least some of the carbonate anions ($CO_3^{2-}$) in the hydrotalcite are substituted with perchlorate anions ($ClO_4^-$) (note that 2 mol of perchlorate anions are substituted per 1 mol of carbonate anions). The molar ratio of hydrotalcite and perchloric acid may be freely set, although a ratio of 0.1 mol to 2 mol of perchloric acid relative to 1 mol of hydrotalcite is typical.

The substitution ratio of carbonate anions in the untreated (unsubstituted) hydrotalcite by perchlorate anions is preferably 50 mol% or more, more preferably 70 mol% or more, and even more preferably 85 mol% or more. Moreover, the substitution ratio of carbonate anions in the untreated (unsubstituted) hydrotalcite by perchlorate anions is preferably 95 mol% or less. When the substitution ratio of carbonate anions in the untreated (unsubstituted) hydrotalcite by perchlorate anions is within any of the specific ranges set forth above, low-temperature tensile elongation of a formed vinyl chloride resin molded product can be further improved.

Hydrotalcite is a non-stoichiometric compound represented by a general formula: $[Mg_{1-x}Al_x(OH)_2]^{x+}[(CO_3)_{x/2}·mH_2O]^{x-}$, and is an inorganic substance having a layered crystal structure including a positively charged basic layer of $[Mg_{1-x}Al_x(OH)_2]^{x+}$ and a negatively charged intermediate layer of $[(CO_3)_{x/2}·mH_2O]^{x-}$. In the preceding general formula, x represents a number that is more than 0 and not more than 0.33. Natural hydrotalcite is represented by $Mg_6Al_2(OH)_{16}CO_3·4H_2O$, whereas a synthetic hydrotalcite represented by $Mg_{4.5}Al_2(OH)_{13}CO_3·3.5H_2O$ is commercially available. Synthetic hydrotalcite can, for example, be synthesized by a method described in JP-S61-174270B.

The content of perchloric acid-treated hydrotalcite in the vinyl chloride resin composition is preferably 0.5 parts by mass or more, more preferably 1 part by mass or more, and even more preferably 1.5 parts by mass or more relative to 100 parts by mass of total vinyl chloride resin content in the vinyl chloride resin composition, and is preferably 7 parts by mass or less, more preferably 6 parts by mass or less, and even more preferably 5.5 parts by mass or less relative to 100 parts by mass of total vinyl chloride resin content in the vinyl chloride resin composition. When the content of perchloric acid-treated hydrotalcite in the vinyl chloride resin composition is within any of the specific ranges set forth above, low-temperature tensile elongation of a formed vinyl chloride resin molded product can be further improved.

A zeolite is a compound represented by a general formula: $M_{x/n}·[(AlO_2)_x·(SiO_2)_y]·zH_2O$ (in the general formula, M is a metal ion of valency n, x + y is the number of tetrahedra per unit cell, and z is the number of moles of water). The type of M in the general formula may be a monovalent or divalent metal such as Na, Li, Ca, Mg, or Zn or a mixture thereof. Note that a zeolite for which M in the preceding general formula is Na is referred to as a "sodium zeolite".

The content of a zeolite in the vinyl chloride resin composition is not specifically limited, but is preferably not less than 0.1 parts by mass and not more than 5 parts by mass relative to 100 parts by mass of total vinyl chloride resin content in the vinyl chloride resin composition, for example.

Examples of inorganic substances that function as pigments include titanium white (white pigment), carbon black (black pigment), and the like.

Titanium white is a white pigment formed of titanium dioxide (also referred to as "titanium oxide", "titania", etc.).

The content of titanium white (titanium dioxide) in the vinyl chloride resin composition is not specifically limited, but is preferably not less than 0.1 parts by mass and not more than 5 parts by mass relative to 100 parts by mass of total vinyl chloride resin content in the vinyl chloride resin composition, for example.

Carbon black is a black pigment having carbon as a main component and also including oxygen, hydrogen, and nitrogen. Specific examples of carbon black include thermal black, acetylene black, channel black, furnace black, lamp black, and bone black.

The content of carbon black in the vinyl chloride resin composition is not specifically limited, but is preferably not less than 0.1 parts by mass and not more than 5 parts by mass relative to 100 parts by mass of total vinyl chloride resin content in the vinyl chloride resin composition, for example.

Examples of inorganic substances that function as fillers include silica, talc, mica, calcium carbonate, clay, alumina, and the like.

The content of an inorganic substance that functions as a filler in the vinyl chloride resin composition can be adjusted as appropriate to the extent that the desired effects according to the present disclosure are obtained.

Note that one of the above-described inorganic substances may be used individually, or two or more of the above-described inorganic substances may be used in combination in a freely selected ratio.

The total inorganic substance content in the vinyl chloride resin composition is preferably 1 part by mass or more, more preferably 1.5 parts by mass or more, and even more preferably 2 parts by mass or more relative to 100 parts by mass of total vinyl chloride resin content in the vinyl chloride resin composition, and is preferably 20 parts by mass or less, more preferably 15 parts by mass or less, and even more preferably 12 parts by mass or less relative to 100 parts by mass of total vinyl chloride resin content in the vinyl chloride resin composition. When the total inorganic substance content in the vinyl chloride resin composition is not less than any of the lower limits set forth above, the desired effect of each of the above-described inorganic substances can be sufficiently displayed. On the other hand, when the total inorganic substance content in the vinyl chloride resin composition is not more than any of the upper limits set forth above, sufficiently high low-temperature tensile elongation of a formed vinyl chloride resin molded product can be ensured.

[Ratio C1/C2 of concentration C1 of inorganic substance in inner part of mixed material particles and concentration C2 of inorganic substance in outer layer of mixed material particles]

When the concentration of the inorganic substance in an inner part of the mixed material particles is taken to be C1 and the concentration of the inorganic substance in an outer layer of the mixed material particles is taken to be C2, a ratio C1/C2 of C1 and C2 is required to be 0.7 or more, is preferably 0.75 or more, more preferably 0.8 or more, even more preferably 0.85 or more, further preferably 0.9 or more, and even further preferably 1.0 or more, and is preferably 2 or less, more preferably 1.5 or less, even more preferably 1.4 or less, further preferably 1.3 or less, and even further preferably 1.2 or less. When the ratio C1/C2 of the concentration C1 of the inorganic substance in the inner part of the mixed material particles and the concentration C2 of the inorganic substance in the outer layer of the mixed material particles is 0.7 or more, this means that the inorganic substance is not excessively concentrated in the outer layer of the mixed material particles. Consequently, low-temperature tensile elongation of a formed vinyl chloride resin molded product can be improved because it is possible to inhibit the occurrence of breaking with the inorganic substance present in the outer layer of the mixed material particles as a starting point under tensing of the vinyl chloride resin molded product at low temperature. On the other hand, when the ratio C1/C2 of the concentration C1 of the inorganic substance in the inner part of the mixed material particles and the concentration C2 of the inorganic substance in the outer layer of the mixed material particles is 2 or less, this means that the inorganic substance is not excessively concentrated in the inner part of the mixed material particles. Consequently, low-temperature tensile elongation of a formed vinyl chloride resin molded product can be further improved because it is possible to inhibit the occurrence of breaking with the inorganic substance present in the inner part of the mixed material particles as a starting point under tensing of the vinyl chloride resin molded product at low temperature.

Note that the ratio C1/C2 of the concentration C1 of the inorganic substance in the inner part of the mixed material particles and the concentration C2 of the inorganic substance in the outer layer of the mixed material particles that is referred to in the present disclosure can be adjusted by, for example, altering the timing of addition of the inorganic substance, the conditions of a kneading step, the conditions of a pulverization step, and so forth in the presently disclosed method of producing a vinyl chloride resin composition described further below.

Also note that the ratio C1/C2 of the concentration C1 of the inorganic substance in the inner part of the mixed material particles and the concentration C2 of the inorganic substance in the outer layer of the mixed material particles that is referred to in the present disclosure can be measured through energy-dispersive X-ray analysis of cross-sections of the mixed material particles.

Specifically, in energy-dispersive X-ray analysis of cross-sections of mixed material particles with an element contained in the inorganic substance as a measurement subject, when a count for that element present in the inner part of the mixed material particles is taken to be c1 and a count for that element present in the outer layer of the mixed material particles is taken to be c2, a ratio c1/c2 of c1 and c2 can be determined as the ratio C1/C2 of the concentration C1 of the inorganic substance in the inner part of the mixed material particles and the concentration C2 of the inorganic substance in the outer layer of the mixed material particles as in a method described in the EXAMPLES section of the present specification.

The element that serves as a measurement subject in the energy-dispersive X-ray analysis is not specifically limited so long as it is an element that is contained in the previously described inorganic substance and is preferably selected from elements that are contained in the previously described inorganic substance but are not contained in components other than the inorganic substance in the vinyl chloride resin composition.

Specifically, the element serving as a measurement subject may be magnesium (Mg) that is contained in a magnesium-containing inorganic substance such as perchloric acid-treated hydrotalcite, aluminum (Al) that is contained in an aluminum-containing inorganic substance such as perchloric acid-treated hydrotalcite or a zeolite, titanium (Ti) that is contained in a titanium-containing inorganic substance such as titanium white (titanium dioxide), or silicon (Si) that is contained in a silicon-containing inorganic substance such as a zeolite, silica, talc, or mica.

Note that in the presently disclosed vinyl chloride resin composition, in a case in which the mixed material particles contain two or more types of inorganic substances, the ratio C1/C2 of C1 and C2 should be 0.7 or more, and is preferably within any of the specific ranges set forth above for at least one type of inorganic substance among these two or more types of inorganic substances. When the ratio C1/C2 of C1 and C2 is 0.7 or more for at least one type of inorganic substance among the two or more types of inorganic substances that are contained in the mixed material particles, this means that the at least one type of inorganic substance is not excessively concentrated in the outer layer of the mixed material particles. Consequently, low-temperature tensile elongation of a formed vinyl chloride resin molded product can be sufficiently improved because this inorganic substance has a low tendency to act as a starting point for breaking in the outer layer of the mixed material particles under tensing of the vinyl chloride resin molded product at low temperature.

Moreover, in a case in which the mixed material particles contain two or more types of inorganic substances, the proportion constituted by inorganic substances satisfying the condition of C1/C2 being 0.7 or more is preferably 20 mass% or more, more preferably 30 mass% or more, and even more preferably 40 mass% or more when the total inorganic substance content in the vinyl chloride resin composition is taken to be 100 mass%. When the proportion constituted by inorganic substances satisfying the condition of C1/C2 being 0.7 or more relative to the total inorganic substance content in the vinyl chloride resin composition is not less than any of the specific values set forth above, low-temperature tensile elongation of a formed vinyl chloride resin molded product can be further improved.

Furthermore, in a case in which one type of inorganic substance contained in the mixed material particles is a compound containing two or more types of elements, the ratio C1/C2 determined through energy-dispersive X-ray analysis with at least one type of element among the two or more types of elements as a measurement subject should be 0.7 or more, and is preferably within any of the specific ranges set forth above.

<<Other components>>

The mixed material particles may further contain components other than the above-described components (i.e., other components). Examples of other components that may be used include, but are not specifically limited to, components among additives such as lubricants; stabilizers; mold release agents; dusting agents other than the subsequently described vinyl chloride resin fine particles; impact modifiers; antioxidants; fungicides; flame retardants; antistatic agents; fillers; light stabilizers; foaming agents; pigments; and deodorants that are not inorganic substances (i.e., that are organic substances).

Examples of other components such as described above that can be contained in the mixed material particles include organic substances among various additives described in WO2016/098344A1, for example, and suitable amounts thereof can also be the same as described in WO2016/098344A1.

<Vinyl chloride resin fine particles>

The presently disclosed vinyl chloride resin composition preferably further contains fine particles formed of a vinyl chloride resin (i.e., vinyl chloride resin fine particles) in addition to the mixed material particles described above. When the vinyl chloride resin composition further contains vinyl chloride resin fine particles, powder fluidity of the vinyl chloride resin composition can be improved. In other words, the vinyl chloride resin fine particles can function as a dusting agent (powder fluidity modifier) in the vinyl chloride resin composition.

Note that the term "resin fine particles" as used in the present specification refers to particles having a particle diameter of less than 30 $\mu$m.

The vinyl chloride resin forming the vinyl chloride resin fine particles may be a homopolymer composed of vinyl chloride monomer units or may be a vinyl chloride copolymer preferably comprising 50 mass% or more of vinyl chloride monomer units, and more preferably comprising 70 mass% or more of vinyl chloride monomer units. Specific examples of monomers (comonomers) that are copolymerizable with vinyl chloride monomer and can be used to form a vinyl chloride copolymer include monomers described in WO2016/098344A1, for example. One of these components may be used individually, or two or more of these components may be used in combination in a freely selected ratio.

The vinyl chloride resin fine particles are preferably produced by emulsion polymerization.

The average degree of polymerization of the vinyl chloride resin forming the vinyl chloride resin fine particles is preferably 500 or more, and more preferably 700 or more, and is preferably 2,600 or less, and more preferably 2,400 or less. When the average degree of polymerization of the vinyl chloride resin forming the vinyl chloride resin fine particles serving as a dusting agent is not less than any of the lower limits set forth above, powder fluidity of the vinyl chloride resin composition improves, and a formed vinyl chloride resin molded product can be provided with better tensile elongation (particularly low-temperature tensile elongation). Moreover, when the average degree of polymerization of the vinyl chloride resin forming the vinyl chloride resin fine particles is not more than any of the upper limits set forth above, meltability of the vinyl chloride resin composition improves, and surface smoothness of a formed vinyl chloride resin molded product can be improved.

The average particle diameter of the vinyl chloride resin fine particles is normally less than 30 $\mu$m, preferably 10 $\mu$m or less, and more preferably 5 $\mu$m or less, and is preferably 0.1 $\mu$m or more, and more preferably 1 $\mu$m or more. When the average particle diameter of the vinyl chloride resin fine particles is not less than any of the lower limits set forth above, the vinyl chloride resin fine particles are not too small to function as a dusting agent, for example, and powder fluidity of the vinyl chloride resin composition can be improved. Moreover, when the average particle diameter of the vinyl chloride resin fine particles is not more than any of the upper limits set forth above, meltability of the vinyl chloride resin composition increases, and surface smoothness of a formed vinyl chloride resin molded product can be improved.

Note that the "average particle diameter of vinyl chloride resin fine particles" referred to in the present disclosure can be measured as the volume-average particle diameter by laser diffraction in accordance with JIS Z8825.

The proportion constituted by the vinyl chloride resin forming the vinyl chloride resin fine particles when the total vinyl chloride resin content in the vinyl chloride resin composition is taken to be 100 mass% may be 0 mass%, but is preferably 5 mass% or more, and more preferably 10 mass% or more, and is preferably 30 mass% or less, and more preferably 20 mass% or less. When the proportion constituted by the vinyl chloride resin forming the vinyl chloride resin fine particles among the total vinyl chloride resin content in the vinyl chloride resin composition is not less than any of the lower limits set forth above, powder fluidity of the vinyl chloride resin composition can be further improved. On the other hand, when the proportion constituted by the vinyl chloride resin forming the vinyl chloride resin fine particles among the total vinyl chloride resin content in the vinyl chloride resin composition is not more than any of the upper limits set forth above, physical strength of a vinyl chloride resin molded product formed using the vinyl chloride resin composition can be increased.

<Average particle diameter of vinyl chloride resin composition>

The average particle diameter of the presently disclosed vinyl chloride resin composition is preferably 100 $\mu$m or more, more preferably 120 $\mu$m or more, even more preferably 150 $\mu$m or more, and further preferably 160 $\mu$m or more, and is preferably 400 $\mu$m or less, more preferably 300 $\mu$m or less, even more preferably 250 $\mu$m or less, and further preferably 210 $\mu$m or less. When the average particle diameter of the vinyl chloride resin composition is within any of the specific ranges set forth above, powder fluidity of the vinyl chloride resin composition can be improved.

Note that the average particle diameter of the vinyl chloride resin composition can be adjusted by altering conditions of a pulverization step in the presently disclosed method of producing a vinyl chloride resin composition that is described below, for example.

(Method of producing vinyl chloride resin composition)

The presently disclosed method of producing a vinyl chloride resin composition includes: kneading a vinyl chloride resin, a plasticizer, and an inorganic substance to obtain a mixture (kneading step); and pulverizing the mixture to obtain mixed material particles (pulverization step). Through the presently disclosed method of producing a vinyl chloride resin composition, it is possible to produce a vinyl chloride resin composition that is capable of forming a vinyl chloride resin molded product having excellent low-temperature tensile elongation. Moreover, by using the presently disclosed method of producing a vinyl chloride resin composition, it is possible to produce the presently disclosed vinyl chloride resin composition set forth above.

Note that the presently disclosed method of producing a vinyl chloride resin composition may further include steps other than the kneading step and the pulverization step described above (i.e., other steps).

<Kneading step>

In the kneading step, a vinyl chloride resin, a plasticizer, and an inorganic substance are kneaded to obtain a mixture. By performing kneading of the mixture described above, it is possible to cause good mixing and dispersion of the above-described components (particularly the inorganic substance) in the resultant mixture and in mixed material particles obtained through pulverization of this mixture. This makes it possible to improve low-temperature tensile elongation of a vinyl chloride resin molded product that is formed using a vinyl chloride resin composition containing the mixed material particles.

Note that components other than the vinyl chloride resin, the plasticizer, and the inorganic substance (i.e., other components) may be further added and kneaded in the kneading step.

The vinyl chloride resin is not specifically limited and may, for example, be the vinyl chloride resin particles that were previously described in the "Vinyl chloride resin composition" section as a specific example of a vinyl chloride resin that can be used in production of the mixed material particles. Moreover, the plasticizer and the inorganic substance are not specifically limited and may, for example, be any of those previously described in the "Vinyl chloride resin composition" section as examples of the plasticizer and the inorganic substance contained in the mixed material particles. Furthermore, the other components may be any of those previously described in the "Vinyl chloride resin composition" section as examples of other components that can be contained in the mixed material particles.

Note that although the vinyl chloride resin, the plasticizer, the inorganic substance, and the other optional components may be separately loaded into a subsequently described kneader to perform kneading in the kneading step, for example, it is preferable that a preliminary mixture obtained through preliminary mixing of the components is loaded into and kneaded in the kneader. By performing preliminary mixing of the components in advance and then subsequently kneading the resultant preliminary mixture, it is possible to cause even better mixing and dispersion of the components (particularly the inorganic substance) in the obtained mixture and in mixed material particles obtained through pulverization of this mixture. This makes it possible to further improve low-temperature tensile elongation of a vinyl chloride resin molded product that is formed using a vinyl chloride resin composition containing the mixed material particles.

The method by which preliminary mixing of the components is performed is not specifically limited and may be a method in which mixing is performed by dry blending. Note that preliminary mixing of the vinyl chloride resin, the inorganic substance, and other optional components may be performed by dry blending, and then the plasticizer may be subsequently added, and further preliminary mixing may be performed, for example. The dry blending is preferably carried out using a Henschel mixer. Moreover, the temperature during dry blending is not specifically limited, but is preferably 50°C or higher, and more preferably 70°C or higher, and is preferably 200°C or lower.

Moreover, kneading of the above-described components or a preliminary mixture containing the above-described components is preferably performed using a kneader, but is not specifically limited to being performed in this manner.

The kneader may be an open roll continuous kneader, an extruder, a twin-screw extruder, or the like, for example. Moreover, the open roll continuous kneader may be a KNEADEX produced by Nippon Coke & Engineering Co., Ltd., for example.

The temperature at which the kneading is performed is not specifically limited, but is preferably not lower than 40°C and not higher than 200°C.

In a case in which the kneading is performed using an open roll continuous kneader (KNEADEX), for example, the inlet temperature may be set as 90°C to 200°C, and preferably as 100°C to 180°C, and the outlet temperature may be set as 40°C to 170°C, and preferably as 50°C to 150°C.

The mixture obtained by the kneading step is preferably shaped into the form of pellets by a known method, but is not specifically limited to being shaped in this manner. Through the mixture obtained by the kneading step being shaped into the form of pellets, it is possible to facilitate pulverization of the mixture to obtain mixed material particles in the subsequently described pulverization step.

<Pulverization step>

In the pulverization step, the mixture that has been obtained in the kneading step is pulverized to obtain mixed material particles.

The pulverization of the mixture is preferably performed using a pulverizer, for example, but is not specifically limited to being performed in this manner. The pulverizer is not specifically limited so long as it can pulverize the mixture to obtain particles having a desired particle diameter and may be a disc mill, a ball mill, a bead mill, a jet mill, or the like, for example.

The conditions of the pulverizer, etc., during pulverization of the mixture can be adjusted as appropriate to the extent that the desired effects according to the present disclosure are obtained.

Note that the mixed material particles obtained by the pulverization step can be used in that form as a vinyl chloride resin composition.

<Other steps>

The presently disclosed method of producing a vinyl chloride resin composition may further include other steps besides the kneading step and the pulverization step described above.

For example, a step of adding vinyl chloride resin fine particles to the mixed material particles obtained by the pulverization step may be included as another step. A vinyl chloride resin composition that is obtained through addition of vinyl chloride resin fine particles with respect to the mixed material particles has excellent powder fluidity. Note that the vinyl chloride resin fine particles that were previously described in the "Vinyl chloride resin composition" section can, for example, be used as the vinyl chloride resin fine particles.

Moreover, the presently disclosed method of producing a vinyl chloride resin composition may further include a step (hereinafter, also referred to as an "optional component addition step") of adding an optional component other than vinyl chloride resin fine particles to the mixed material particles obtained by the pulverization step to the extent that the desired effects according to the present disclosure are obtained. However, from a viewpoint of ensuring sufficiently high low-temperature tensile elongation of a vinyl chloride resin molded product that is formed using a produced vinyl chloride resin composition, it is preferable that the presently disclosed method of producing a vinyl chloride resin composition does not include an optional component addition step. Moreover, in a case in which the presently disclosed method of producing a vinyl chloride resin composition does include an optional component addition step, it is preferable that the optional component is not an inorganic substance (i.e., is preferably an organic substance).

(Vinyl chloride resin molded product)

A feature of the presently disclosed vinyl chloride resin molded product is that it is obtained by molding the vinyl chloride resin composition set forth above by any method. As a result of the presently disclosed vinyl chloride resin molded product being formed using the vinyl chloride resin composition set forth above, the presently disclosed vinyl chloride resin molded product normally contains at least mixed material particles that contain a vinyl chloride resin, a plasticizer, and an inorganic substance and has excellent low-temperature tensile elongation.

Therefore, the presently disclosed vinyl chloride resin molded product can suitably be used as an automobile interior material such as a surface skin of an automobile instrument panel.

<Formation method of vinyl chloride resin molded product>

Although no specific limitations are placed on the mold temperature in powder slush molding in a situation in which the vinyl chloride resin molded product is formed by powder slush molding, the mold temperature is preferably 200°C or higher, and more preferably 220°C or higher, and is preferably 300°C or lower, and more preferably 280°C or lower.

The following method, for example, may be used in production of the vinyl chloride resin molded product without any specific limitations. In this method, the presently disclosed vinyl chloride resin composition is sprinkled onto a mold having a temperature within any of the ranges set forth above. The vinyl chloride resin composition is initially left for not less than 5 seconds and not more than 30 seconds and, after shaking off any excess vinyl chloride resin composition, is then further left for not less than 30 seconds and not more than 3 minutes at an arbitrary temperature. The mold is subsequently cooled to a temperature of not lower than 10°C and not higher than 60°C, and the presently disclosed vinyl chloride resin molded product that is obtained is removed from the mold. A sheet-shaped molded product that imitates the shape of the mold is obtained.

(Laminate)

The presently disclosed laminate includes a foamed polyurethane molded product and the vinyl chloride resin molded product set forth above. The vinyl chloride resin molded product typically constitutes one surface of the laminate.

As a result of the presently disclosed laminate including a vinyl chloride resin molded product having excellent low-temperature tensile elongation that is formed using the presently disclosed vinyl chloride resin composition, the presently disclosed laminate can suitably be used as an automobile interior material forming an automobile interior component (particularly an automobile instrument panel), for example.

The method by which the foamed polyurethane molded product and the vinyl chloride resin molded product are stacked is not specifically limited and may, for example, be a method such as described below. Specifically, (1) a method in which the foamed polyurethane molded product and the vinyl chloride resin molded product are separately prepared and are subsequently adhered to one another by thermal fusion bonding, thermal adhesion, or using a commonly known adhesive, or (2) a method in which raw materials of the foamed polyurethane molded product such as an isocyanate and a polyol are caused to react and polymerize on the vinyl chloride resin molded product while carrying out polyurethane foaming by a commonly known method to directly form the foamed polyurethane molded product on the vinyl chloride resin molded product may be adopted. The latter method (2) is more suitable because it involves a simple process and enables laminates of various different shapes to be obtained while easily achieving strong adhesion of the vinyl chloride resin molded product and the foamed polyurethane molded product.

EXAMPLES

The following provides a more specific description of the present disclosure based on examples. However, the present disclosure is not limited to the following examples. In the following description, "%" and "parts" used in expressing quantities are by mass, unless otherwise specified.

Moreover, the following methods were used to measure and evaluate the ratio C1/C2 of the concentration C1 of an inorganic substance in an inner part of mixed material particles and the concentration C2 of the inorganic substance in an outer layer of the mixed material particles, the average particle diameter of a vinyl chloride resin composition, and the tensile characteristics (tensile stress and tensile elongation) of a vinyl chloride resin molded sheet.

<Ratio C1/C2 of C1 and C2>

The ratio C1/C2 of the concentration C1 of an inorganic substance in an inner part of mixed material particles and the concentration C2 of the inorganic substance in an outer layer of the mixed material particles was measured by the following method.

First, energy-dispersive X-ray (also abbreviated as "EDX" or "EDS") analysis was performed with respect to a cross-section of a mixed material particle (cross-section having a maximum diameter of at least 50 $\mu$m) contained in a vinyl chloride resin composition that was obtained in each example or comparative example. This energy-dispersive X-ray analysis was performed with the element magnesium (Mg) as a measurement subject and with a line segment cutting across a central part of the cross-section as a measurement range (measurement line segment). Note that this analysis is referred to herein as "EDX analysis". In the EDX analysis, for each measurement point present on the measurement line segment, an average element count value was calculated for a total of 11 points including the measurement point itself and 5 measurement points at each side thereof, and, in this manner, a graph with the measurement point (point number) on a horizontal axis and the element count on a vertical axis was obtained. In the obtained graph, the element count for a measurement point corresponding to a central part of the cross-section of the mixed material particle was taken to be the count $c_1$ of the element present in an inner part of the mixed material particle. Moreover, in the obtained graph, an average value of the element count at a measurement point that was 5 measurement points closer to the central part of the cross-section than a measurement point corresponding to an intersection point of one end of the measurement line segment and the perimeter of the cross-section of the mixed material particle and the element count at a measurement point that was 5 measurement points closer to the central part of the cross-section than a measurement point corresponding to an intersection point of the other end of the measurement line segment and the perimeter of the cross-section of the mixed material particle was taken to be the count $c_2$ of the element present in an outer layer of the mixed material particle. A ratio $c_1/c_2$ of the obtained values of $c_1$ and $c_2$ was calculated. Note that 100 measurement points were set at equal intervals along the measurement line segment. Moreover, setting of the measurement line segment was performed such that the total length of sections at both ends of the measurement line segment that protruded from the perimeter of the cross-section of the mixed material particle was not more than 30% relative to the length of the entire measurement line segment.

The measurement and calculation described above were repeated for 3 randomly selected mixed material particles in a vinyl chloride resin composition, and an average value of the obtained ratios $c_1/c_2$ was taken to be the ratio C1/C2 of the concentration C1 of the inorganic substance in the inner part of the mixed material particles and the concentration C2 of the inorganic substance in the outer layer of the mixed material particles.

Note that an image of a cross-section of a mixed material particle and a measurement line segment, a graph obtained by EDX analysis and an image of the measurement line segment arranged alongside the horizontal axis of the graph, and also the count $c_1$ of the element present in an inner part of the mixed material particle, the count $c_2$ of the element present in an outer layer of the mixed material particle, the ratio $c_1/c_2$ of $c_1$ and $c_2$, and the average value of $c_1/c_2$ (corresponding to C1/C2) are illustrated in FIG. 1 and FIG. 2 for each of the examples and comparative examples.

<Average particle diameter of vinyl chloride resin composition>

The percentage of a vinyl chloride resin composition on a sieve was determined in accordance with "Test sieving-General requirements" prescribed in JIS Z 8815 using the following instrument, sieves, and calculation formula.

Used instrument: ROBOT SIFTER RPS-105M produced by Seishin Enterprise Co., Ltd.

Used sieves: 35-mesh (opening size: 417 $\mu$m), 42-mesh (opening size: 351 $\mu$m), 70-mesh (opening size: 210 $\mu$m), 80-mesh (opening size: 175 $\mu$m), 100-mesh (opening size: 147 $\mu$m), 150-mesh (opening size: 104 $\mu$m), 200-mesh (opening size: 74 $\mu$m)

Calculation formula: R = (m/T) $\times$ 100 (R: percentage on sieve [%]; m: mass on sieve [g]; T: mass of collected test sample [g])

Measurement was performed in order starting from a sieve having a largest opening size among the used sieves. When determining the percentage on a sieve, a sieve for which the percentage on the sieve first exceeded 50% was taken to be a first sieve. The opening size of the first sieve was taken to be A μm and the percentage on the sieve when using the first sieve was taken to be X% (X > 50). Moreover, a sieve of larger opening size that was used for measurement one position in the order prior to the first sieve was taken to be a second sieve, the opening size of the second sieve was taken to be B μm, and the opening size on the sieve when using the second sieve was taken to be Y% (Y ≤ 50). The average particle diameter of the vinyl chloride resin composition was then measured using the following formula.

$$\text{Average particle diameter} = A + (B - A) \times \{(X - 50)/(X/Y)\}$$

<Tensile characteristics>

«Initial»

An obtained vinyl chloride resin molded sheet was punched out as a No. 1 dumbbell prescribed in JIS K6251, and then the tensile breaking stress (MPa) and the tensile breaking elongation (%) thereof at a low temperature of -25°C were measured in accordance with JIS K7113 with a tensing rate of 200 mm/min. A larger value for tensile breaking elongation indicates that a vinyl chloride resin molded sheet has better initial (unheated state) low-temperature tensile elongation.

<<Post-heating (heat aging test)>>

A laminate lined with a foamed polyurethane molded product was used as a sample. The sample was placed in an oven and was subjected to a heat aging test through 100 hours of heating at a temperature of 130°C. Next, the foamed polyurethane molded product was peeled from the post-heating laminate to prepare just a vinyl chloride resin molded sheet. The tensile breaking stress (MPa) and the tensile breaking elongation (%) of the vinyl chloride resin molded sheet were measured under the same conditions as for the initial state described above. A larger value for tensile breaking elongation indicates that a vinyl chloride resin molded sheet has better post-heating (heat aging test) low-temperature tensile elongation.

(Example 1)

<Production of vinyl chloride resin composition>

With the exception of plasticizers and vinyl chloride resin fine particles used as a dusting agent, components indicated in Table 1 were loaded into a Henschel mixer and subjected to preliminary mixing. At the point at which the temperature of the resultant first preliminary mixture rose to 80°C, all of the plasticizers were added, and drying up of the preliminary mixture was caused to occur (i.e., the preliminary mixture changed to a dry state through absorption of the plasticizers by vinyl chloride resin particles used as a vinyl chloride resin). Thereafter, cooling was performed to 40°C or lower to yield a second preliminary mixture.

The second preliminary mixture was loaded into an open roll continuous kneader (KNEADEX produced by Nippon Coke & Engineering Co., Ltd.) that was set to conditions of an inlet temperature of 110°C to 170°C and an outlet temperature of 100°C to 130°C and was subjected to kneading. A 40°C to 90°C cylinder roll provided with holes was pressed against the outlet of the kneader, and mixture extruded through the holes was cut using a fixed blade so as to obtain pellets of the mixture.

The obtained pellets of the mixture were loaded into a cooling mechanism-equipped disc mill (CENTRI CUTTER produced by Nippon Coke & Engineering Co., Ltd.) that was set to conditions of a rotary blade temperature of -10°C, a rotary blade gap of 0.2 mm, and a rotary blade rotation speed of 600 Hz and were pulverized to obtain a powder of mixed material particles.

Vinyl chloride resin fine particles serving as a dusting agent that are indicated in Table 1 were added to the obtained powder of the mixed material particles so as to obtain a vinyl chloride resin composition.

The obtained vinyl chloride resin composition was used to measure the ratio C1/C2 of the concentration C1 of an inorganic substance in an inner part of the mixed material particles and the concentration C2 of the inorganic substance in an outer layer of the mixed material particles and also to measure the average particle diameter of the vinyl chloride resin composition by the previously described methods. The results are shown in Table 1.

<Formation of vinyl chloride resin molded product>

A vinyl chloride resin molded sheet having dimensions of 200 mm × 300 mm × 1 mm was produced as follows.
Specifically, the vinyl chloride resin composition obtained as described above was sprinkled onto a textured mold that was heated to a temperature of 250°C and, after being left to melt for an arbitrary time, excess vinyl chloride resin composition was shaken off. Thereafter, the textured mold onto which the vinyl chloride resin composition had been sprinkled was placed at rest in an oven set to a temperature of 200°C, and once 60 seconds had passed after being placed at rest, the textured mold was cooled with cooling water. Once the mold temperature had dropped to 40°C, a vinyl chloride resin molded sheet was removed from the mold as a vinyl chloride resin molded product.
The obtained vinyl chloride resin molded sheet (dimensions: 200 mm × 300 mm × 1 mm) was subjected to measurement and evaluation of tensile characteristics by the previously described method. The results are shown in Table 1.

<Formation of laminate>

The obtained vinyl chloride resin molded sheet (dimensions: 200 mm × 300 mm × 1 mm) was placed inside a 200 mm × 300 mm × 10 mm mold with the textured surface facing downward.
A polyol mixture was separately obtained by mixing 50 parts of a PO (propylene oxide)/EO (ethylene oxide) block adduct of propylene glycol (hydroxyl value: 28; terminal EO unit content: 10%; internal EO unit content: 4%), 50 parts of a PO/EO block adduct of glycerin (hydroxyl value: 21; terminal EO unit content: 14%), 2.5 parts of water, 0.2 parts of an ethylene glycol solution of triethylenediamine (produced by Tosoh Corporation; product name: TEDA-L33), 1.2 parts of triethanolamine, 0.5 parts of triethylamine, and 0.5 parts of a foam stabilizer (produced by Shin-Etsu Chemical Co., Ltd.; product name: F-122). The obtained polyol mixture was mixed with polymethylene polyphenylene polyisocyanate (polymeric MDI) in a ratio determined to give an index of 98 so as to prepare a mixed liquid. The prepared mixed liquid was poured onto the vinyl chloride resin molded sheet that had been placed in the mold as described above. Thereafter, the mold was covered by a 348 mm × 255 mm × 10 mm aluminum plate to seal the mold. After sealing, the mold was left for 5 minutes so as to form a laminate in which a vinyl chloride resin molded sheet (thickness: 1 mm) as a surface skin was lined with a foamed polyurethane molded product (thickness: 9 mm; density: 0.2 g/cm$^3$).
The formed laminate was removed from the mold, and the vinyl chloride resin sheet in the laminate was subjected to measurement and evaluation of post-heating (heat aging test) tensile characteristics by the previously described method. The results are shown in Table 1.

(Example 2)

A vinyl chloride resin composition, a vinyl chloride resin molded product, and a laminate were produced in the same way as in Example 1 with the exception that in production of the vinyl chloride resin composition of Example 1, 20 parts by mass of an ethylene-vinyl acetate copolymer (EVA) was further added as an impact modifier other than a vinyl chloride resin as indicated in Table 1, and then preliminary mixing was performed to obtain the first preliminary mixture. Measurements and evaluations were made in the same manner as in Example 1. The results are shown in Table 1.

(Example 3)

A vinyl chloride resin composition, a vinyl chloride resin molded product, and a laminate were produced in the same way as in Example 1 with the exception that in production of the vinyl chloride resin composition of Example 1, 98 parts by mass of a trimellitic acid ester was added as a plasticizer instead of 100 parts by mass of an adipic acid-based polyester, 4 parts by mass of carbon black was added as a pigment instead of 1 part by mass of titanium oxide, and the additive amount of 12-hydroxystearic acid as a mold release agent was changed from 0.6 parts by mass to 0.4 parts by mass as indicated in Table 1, and then preliminary mixing was performed to obtain the first preliminary mixture. Measurements and evaluations were made in the same manner as in Example 1. The results are shown in Table 1.

(Comparative Example 1)

A vinyl chloride resin composition, a vinyl chloride resin molded product, and a laminate were produced in the same way as in Example 1 with the exception that in production of the vinyl chloride resin composition of Example 1, the vinyl chloride resin composition was obtained by adding vinyl chloride resin fine particles serving as a dusting agent to the second preliminary mixture without performing kneading and pulverization. Measurements and evaluations were made in the same manner as in Example 1. The results are shown in Table 1.

(Comparative Example 2)

A vinyl chloride resin composition, a vinyl chloride resin molded product, and a laminate were produced in the same way as in Example 1 with the exception that in production of the vinyl chloride resin composition of Example 2, the vinyl chloride resin composition was obtained by adding vinyl chloride resin fine particles serving as a dusting agent to the second preliminary mixture without performing kneading and pulverization. Measurements and evaluations were made in the same manner as in Example 1. The results are shown in Table 1.

[Table 1]

| | | | Comparative Example 1 | Comparative Example 2 | Example 1 | Example 2 | Example 3 |
|---|---|---|---|---|---|---|---|
| Formulation | Vinyl chloride resin | | Vinyl chloride resin particles[1] [parts by mass] | 100 | 100 | 100 | 100 | 100 |
| | Plasticizer | | Adipic acid-based polyester[2] [parts by mass] | 100 | 100 | 100 | 100 | - |
| | | | Trimellitic acid ester[3] [parts by mass] | - | - | - | - | 98 |
| | | | Epoxidized soybean oil[4] [parts by mass] | 5 | 5 | 5 | 5 | 5 |
| | Inorganic substance | Stabilizer | Perchloric acid-treated hydrotalcite[5] [parts by mass] | 4.6 | 4.6 | 4.6 | 4.6 | 4.6 |
| | | | Sodium zeolite[6] [parts by mass] | 2.4 | 2.4 | 2.4 | 2.4 | 2.4 |
| | | Pigment | White (titanium oxide)[7] [parts by mass] | 1 | 1 | 1 | 1 | - |
| | | | Black (carbon black)[8] [parts by mass] | - | - | - | - | 4 |
| | Organic substance | Stabilizer | Stearoylbenzoylmethane ($\beta$-diketone)[9] [parts by mass] | 0.5 | 0.5 | 0.5 | 0.5 | 0.5 |
| | | | Zinc stearate[10] [parts by mass] | 0.2 | 0.2 | 0.2 | 0.2 | 0.2 |
| | | | Hindered amine light stabilizer[11] [parts by mass] | 0.2 | 0.2 | 0.2 | 0.2 | 0.2 |
| | | | Triisodecyl phosphite[12] [parts by mass] | 0.3 | 0.3 | 0.3 | 0.3 | 0.3 |
| | | Mold release agent | 12-Hydroxystearic acid [parts by mass] | 0.6 | 0.6 | 0.6 | 0.6 | 0.4 |
| | | Impact modifier | Ethylene-vinyl acetate copolymer (EVA)[14] [parts by mass] | - | 20 | - | 20 | - |
| | Dusting agent | | Vinyl chloride resin fine particles[15] [parts by mass] | 15 | 15 | 15 | 15 | 15 |
| Production method of vinyl chloride resin composition | | | | Only preliminary mixing | | Kneading and pulverization | | |

(continued)

| | | | Comparative Example 1 | Comparative Example 2 | Example 1 | Example 2 | Example 3 |
|---|---|---|---|---|---|---|---|
| Ratio (C1/C2) of concentration C1 of inorganic substance in inner part of particles and concentration C2 of inorganic substance in outer layer of particles | | | 0.59 | 0.56 | 1.06 | 1.14 | 1.07 |
| Average particle diameter of vinyl chloride resin composition | | | 129 | 206 | 184 | 207 | 160 |
| Evaluations | Tensile breaking stress [MPa] | Initial | 20.4 | 23.6 | 24.5 | 237 | 20.5 |
| | | Post-heat aging test (100 hr heating at 130°C) | 26.1 | 26.7 | 27.5 | 27.5 | 25.6 |
| | Tensile breaking elongation [%] | Initial | 39 | 94 | 163 | 158 | 187 |
| | | Post-heat aging test (100 hr heating at 130°C) | 12 | 47 | 138 | 138 | 125 |

(1) ZEST 1300SI (product name) produced by Shin Dai-ichi Vinyl Corporation (vinyl chloride resin particles obtained by suspension polymerization; average degree of polymerization: 1,300; average particle diameter: 110 $\mu$m)

(2) ADK CIZER PN-7650 (product name) produced by Adeka Corporation

(3) TRIMEX N-08 (product name) produced by Kao Corporation (tri-normal alkyl (C8, C10) trimellitate)

(4) ADK CIZER O-130S (product name) produced by Adeka Corporation

(5) ALCAMIZER® (ALCAMIZER is a registered trademark in Japan, other countries, or both) 5 (product name) produced by Kyowa Chemical Industry Co., Ltd.

(6) MIZUKALIZER DS (product name) produced by Mizusawa Industrial Chemicals, Ltd.

(7) DAP-1050 White (product name) produced by Dainichiseika Color and Chemicals Mfg. Co., Ltd.

(8) DA PX 1720(A) Black (product name) produced by Dainichiseika Color and Chemicals Mfg. Co., Ltd.

(9) Karenz DK-1 (product name) produced by Showa Denko K.K.

(10) SAKAI SZ2000 (product name) produced by Sakai Chemical Industry Co., Ltd.

(11) ADK STAB LA-63P (product name) produced by Adeka Corporation

(12) ADK STAB SC-131 (product name) produced by Adeka Corporation

(13) ADK STAB LS-12 (product name) produced by Adeka Corporation

(14) Nipoflex 13B53D (product name) produced by Tosoh Corporation

(15) ZEST PQLTX (product name) produced by Shin Dai-ichi Vinyl Corporation (produced by emulsion polymerization; average degree of polymerization: 800; average particle diameter: 1.8 $\mu$m)

It can be seen from Table 1 that low-temperature tensile elongation was excellent for vinyl chloride resin molded products formed using the vinyl chloride resin compositions of Examples 1 to 3, which each contained mixed material particles that contained a vinyl chloride resin, a plasticizer, and an inorganic substance and in which a ratio C1/C2 of the concentration C1 of the inorganic substance in an inner part and the concentration C2 of the inorganic substance in an outer layer was not less than a specific value.

In contrast, it can be seen that low-temperature tensile elongation was poor for vinyl chloride resin molded products formed using the vinyl chloride resin compositions of Comparative Examples 1 and 2, which each did not contain the specific mixed material particles described above.

INDUSTRIAL APPLICABILITY

According to the present disclosure, it is possible to provide a vinyl chloride resin composition that is capable of forming a vinyl chloride resin molded product having excellent low-temperature tensile elongation.

Moreover, according to the present disclosure, it is possible to provide a vinyl chloride resin molded product having excellent low-temperature tensile elongation.

Furthermore, according to the present disclosure, it is possible to provide a laminate including this vinyl chloride resin molded product.

**Claims**

1. A vinyl chloride resin composition comprising mixed material particles containing a vinyl chloride resin, a plasticizer, and an inorganic substance, wherein
   when concentration of the inorganic substance in an inner part of the mixed material particles is taken to be C1 and concentration of the inorganic substance in an outer layer of the mixed material particles is taken to be C2, a ratio C1/C2 of C1 and C2 is 0.7 or more.

2. The vinyl chloride resin composition according to claim 1, further comprising fine particles formed of a vinyl chloride resin.

3. The vinyl chloride resin composition according to claim 1 or 2, having an average particle diameter of not less than 100 $\mu$m and not more than 400 $\mu$m.

4. The vinyl chloride resin composition according to any one of claims 1 to 3, wherein the plasticizer includes either or both of a trimellitic acid ester and a polyester.

5. The vinyl chloride resin composition according to any one of claims 1 to 4, wherein content of the plasticizer is not less than 30 parts by mass and not more than 200 parts by mass relative to 100 parts by mass of total vinyl chloride resin content in the vinyl chloride resin composition.

6. The vinyl chloride resin composition according to any one of claims 1 to 5, used in powder molding.

7. The vinyl chloride resin composition according to any one of claims 1 to 6, used in powder slush molding.

8. A vinyl chloride resin molded product obtained through molding of the vinyl chloride resin composition according to any one of claims 1 to 7.

9. The vinyl chloride resin molded product according to claim 8, for an automobile instrument panel surface skin.

10. A laminate comprising: a foamed polyurethane molded product; and the vinyl chloride resin molded product according to claim 8 or 9.

11. The laminate according to claim 10, for an automobile instrument panel.

12. A method of producing a vinyl chloride resin composition comprising:

kneading a vinyl chloride resin, a plasticizer, and an inorganic substance to obtain a mixture; and
pulverizing the mixture to obtain mixed material particles.

## FIG. 1

|  | Example 1 | | | Example 2 | | | Example 3 | | |
|---|---|---|---|---|---|---|---|---|---|
| Image of particle cross-section and measurement line segment | | | | | | | | | |
| Graph obtained by EDX analysis and image of measurement line segment | | | | | | | | | |
| Measurement subject | Particle 1 | Particle 2 | Particle 3 | Particle 1 | Particle 2 | Particle 3 | Particle 1 | Particle 2 | Particle 3 |
| Count $c_1$ of element present in inner part of particle | 108 | 93 | 156 | 118 | 139 | 66 | 115 | 111 | 76 |
| Count $c_2$ of element present in outer layer of particle | 95.5 | 93 | 150.5 | 98 | 117 | 64 | 104 | 125.5 | 63 |
| Ratio $c_1/c_2$ of $c_1$ and $c_2$ | 1.13 | 1.00 | 1.04 | 1.20 | 1.19 | 1.03 | 1.11 | 0.88 | 1.21 |
| Average value of $c_1/c_2$ (= $C_1/C_2$) | 1.06 | | | 1.14 | | | 1.07 | | |

## FIG. 2

| | Comparative Example 1 | | | Comparative Example 2 | | |
|---|---|---|---|---|---|---|
| Image of particle cross-section and measurement line segment | | | | | | |
| Graph obtained by EDX analysis and image of measurement line segment | | | | | | |
| Measurement subject | Particle 1 | Particle 2 | Particle 3 | Particle 1 | Particle 2 | Particle 3 |
| Count $c_1$ of element present in inner part of particle | 59 | 41 | 50 | 67 | 37 | 72 |
| Count $c_2$ of element present in outer layer of particle | 91 | 77.5 | 84.5 | 121.5 | 58 | 147 |
| Ratio $c_1/c_2$ of $c_1$ and $c_2$ | 0.65 | 0.53 | 0.59 | 0.55 | 0.64 | 0.49 |
| Average value of $c_1/c_2$ (= $C_1/C_2$) | 0.59 | | | 0.56 | | |

EP 4 316 771 A1

## INTERNATIONAL SEARCH REPORT

| International application No. |
| --- |
| **PCT/JP2022/015681** |

### A. CLASSIFICATION OF SUBJECT MATTER

*B29C 41/18*(2006.01)i; *B29K 27/06*(2006.01)n; *B29L 9/00*(2006.01)n; *B32B 27/30*(2006.01)i; *B32B 27/40*(2006.01)i; *C08J 3/12*(2006.01)i; *C08J 3/20*(2006.01)i; *C08K 5/12*(2006.01)i; *C08L 27/06*(2006.01)i; *C08L 67/02*(2006.01)i; *C08K 3/00*(2018.01)i

FI: C08L27/06; C08K3/00; B29C41/18; B32B27/30 101; B32B27/40; C08L67/02; C08K5/12; C08J3/20 Z CEV; C08J3/12 A; B29K27:06; B29L9:00

According to International Patent Classification (IPC) or to both national classification and IPC

### B. FIELDS SEARCHED

Minimum documentation searched (classification system followed by classification symbols)

B29C41/18; B29K27/06; B29L9/00; B32B27/00-27/42; C08J3/00-3/28; C08K3/00-13/08; C08L27/00-27/24; C08L67/00-67/08

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | JP 10-182910 A (SUMITOMO BAKELITE CO LTD) 07 July 1998 (1998-07-07) claims, paragraphs [0012]-[0014], examples 2, 4 | 1, 4, 5, 8, 12 |
| Y | | 2-7, 9-11 |
| X | JP 2016-518484 A (OMYA INTERNATIONAL AG) 23 June 2016 (2016-06-23) claims, paragraphs [0099], [0106], [0112], example 3 | 1, 8, 12 |
| Y | | 2-7, 9-11 |
| X | CN 103992594 A (ANHUI NINGGUO MINGHAO PACKAGING MATERIALS CO., LTD.) 20 August 2014 (2014-08-20) claims, examples | 1, 5, 8, 12 |
| Y | | 2, 3, 6, 7, 9-11 |
| A | | 4 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **08 June 2022** | **28 June 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

## INTERNATIONAL SEARCH REPORT

| | International application No. |
|---|---|
| | **PCT/JP2022/015681** |

### C. DOCUMENTS CONSIDERED TO BE RELEVANT

| Category* | Citation of document, with indication, where appropriate, of the relevant passages | Relevant to claim No. |
|---|---|---|
| X | JP 6-80788 A (DAINIPPON INK & CHEM INC) 22 March 1994 (1994-03-22) claims, paragraphs [0016]-[0020] | 1, 3-5, 8, 12 |
| A | | 2, 6, 7, 9-11 |
| X | JP 2009-132032 A (SEED CO LTD) 18 June 2009 (2009-06-18) claims, paragraphs [0046]-[0050], examples | 1, 4, 5, 8, 12 |
| A | | 2, 3, 6, 7, 9-11 |
| Y | WO 2020/090556 A1 (ZEON CORPORATION) 07 May 2020 (2020-05-07) claims, paragraphs [0026]-[0029], examples | 2-7, 9-11 |
| Y | WO 2016/098344 A1 (ZEON CORPORATION) 23 June 2016 (2016-06-23) claims, paragraphs [0027]-[0031], [0032]-[0037], examples | 2-7, 9-11 |
| Y | WO 2019/087534 A1 (KANEKA CORP) 09 May 2019 (2019-05-09) claims, paragraphs [0002], [0022]-[0028] | 2-7, 9-11 |
| A | JP 5-59243 A (HIROSHIMA KASEI LTD) 09 March 1993 (1993-03-09) claims | 1-12 |
| P, A | WO 2021/261162 A1 (ZEON CORPORATION) 30 December 2021 (2021-12-30) claims | 1-12 |
| P, A | WO 2022/050027 A1 (ZEON CORPORATION) 10 March 2022 (2022-03-10) claims | 1-12 |

Form PCT/ISA/210 (second sheet) (January 2015)

INTERNATIONAL SEARCH REPORT
Information on patent family members

International application No.

**PCT/JP2022/015681**

| Patent document cited in search report | | | Publication date (day/month/year) | Patent family member(s) | Publication date (day/month/year) |
|---|---|---|---|---|---|
| JP | 10-182910 | A | 07 July 1998 | (Family: none) | |
| JP | 2016-518484 | A | 23 June 2016 | US 2016/0017113 A1 claims, paragraphs [0105], [0112], [0118], example 3 CN 105073845 A | |
| CN | 103992594 | A | 20 August 2014 | (Family: none) | |
| JP | 6-80788 | A | 22 March 1994 | (Family: none) | |
| JP | 2009-132032 | A | 18 June 2009 | US 2008/0182924 A1 claims, paragraphs [0082]-[0086], examples WO 2008/090590 A1 KR 10-2008-0070547 A | |
| WO | 2020/090556 | A1 | 07 May 2020 | US 2021/0395506 A1 claims, paragraphs [0042]-[0049], examples CN 112867592 A | |
| WO | 2016/098344 | A1 | 23 June 2016 | CN 107001750 A | |
| WO | 2019/087534 | A1 | 09 May 2019 | US 2021/0179833 A1 claims, paragraphs [0002], [0024]-[0030] CN 111601846 A | |
| JP | 5-59243 | A | 09 March 1993 | (Family: none) | |
| WO | 2021/261162 | A1 | 30 December 2021 | (Family: none) | |
| WO | 2022/050027 | A1 | 10 March 2022 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020090556 A1
- WO 2016098344 A1

- JP S61174270 B